# EUROPEAN PATENT SPECIFICATION

(11) **EP 3 056 084 B1**
(45) Date of publication and mention of the grant of the patent: **20.11.2019**
(21) Application number: 16156291.3
(22) Date of filing: 29.06.2007
(51) Int. Cl.: A01N 25/34, A01N 25/10, A01N 53/00, A01N 43/30, A01P 7/00, D01F 1/10, D06M 23/00

(54) **INSECTICIDAL CO-EXTRUDED MONOFILAMENT**
INSEKTIZIDES KOEXTRUDIERTES MONOFILAMENT
MONOFILAMENT INSECTICIDE CO-EXTRUDÉ

(43) Date of publication of application: 17.08.2016
(62) Divisional of application: 07764449.0
(73) Proprietor: Vestergaard SA, 1003 Lausanne (CH)
(72) Inventor: VESTERGAARD FRANDSEN, Mikkel, 1003 Lausanne (CH)
(74) Representative: Nielsen, Leif

(56) References cited:
- WO-A-01/37662
- WO-A-98/03718
- WO-A-03/063587
- US-A1- 2007 157 395
- DATABASE WPI Week 199629 Thomson Scientific, London, GB; AN 1996-283981 XP002481885, & JP 8 120524 A (NIPPON ESTER CO LTD) 14 May 1996 (1996-05-14)
- DATABASE WPI Week 199628 Thomson Scientific, London, GB; AN 1996-272959 XP002481886, & JP 8 113828 A (NIPPON ESTER CO LTD) 7 May 1996 (1996-05-07)
- DATABASE WPI Week 199631 Thomson Scientific, London, GB; AN 1996-307145 XP002481887, & JP 8 134720 A (TEIJIN LTD) 28 May 1996 (1996-05-28)
- DATABASE WPI Week 199443 Thomson Scientific, London, GB; AN 1994-347593 XP002481888, & JP 6 272112 A (MITSUBISHI RAYON CO LTD) 27 September 1994 (1994-09-27)
- Erin L. Amweg ET AL: "EFFECT OF PIPERONYL BUTOXIDE ON PERMETHRIN TOXICITY IN THE AMPHIPOD HYALELLA AZTECA", ENVIRONMENTAL TOXICOLOGY AND CHEMISTRY., vol. 25, no. 7, 1 January 2006 (2006-01-01), pages 1817-1825, XP055584944, US ISSN: 0730-7268, DOI: 10.1897/05-440R.1

## Description

### FIELD OF THE INVENTION

The present invention relates to insecticidal threads, for example as used for mosquito nets and fabrics.

### BACKGROUND OF THE INVENTION

Different insecticidal treatments of nets and different applications of such nets are disclosed in prior art, for example the general treatment of a netting in International patent application WO01/37662 by Skovmand, the application as a fencing in International patent application WO03/003827 by Bauer and Skovmand, the application as a protective cover in International patent application WO03/090532 by Vestergaard Frandsen.

One of encountered problems for mosquito nets and insecticidal fabrics has turned out in field studies, where it has been found that the efficiency of mosquito nets is reduced when exposed to sunlight or by general exposure to heat. In order to keep a long lasting efficiency, it has been proposed in International patent application WO 03/063587 by Vestergaard Frandsen to incorporate insecticide inside a fibre structure with gradual migration of the insecticide to the surface of the fibre. The mosquito net with regis-terred trademark Olyset Net® by the company Sumitomo® comprises a monofilament polyethylene yarn with insecticide incorporated in the yarn.

In order to enhance the efficiency on a general basis, synergists have been proposed to be included in fabrics and nettings. For example, in US patent application US 2007/0009563 by Hataipitisuk and in International patent application WO 90/14006 by Mooney et al., PBO is proposed as efficiency enhancer in insecticidal fibres and fabrics. International Patent applications WO06/128867 by Koradin et al. and WO06/128870 by Karl et al. propose PBO as a synergist in fabrics and nettings.

Generally, there is an increased problem with metabolic of insects against insecticides, and Piperonyl Butoxide (PBO) has been proposed for counteracting resistance. In connection with field spraying, PBO is known as a resistance reducer, for example as disclosed in UK patent application 2 388 778 assigned to Rothamsted. US patent 5 503 918 by Samson et al. discloses amylopectin as an insecticidal synergist in tent fabrics, and US 3 859 121 by Yeadon et al. discloses the use of PBO as a synergist in packaging.

When different insecticides are incorporated into a polymer matrix, for example as disclosed in WO03/063587 by Vestergaard Frandsen et al., or if different insecticides are incorporated with a synergist in a polymer matrix for a pet collar, as disclosed in WO6/1247067 by Albright, the migration of the insecticides can be difficult to control, as a migration promoter or inhibitor of one insecticide or synergist may influence the migration of the other insecticide. Thus, if a certain release is desired of different insecticides, this is a difficult to achieve, though highly desired.

Especially in connection with mosquito nets or other forms of fibrous insecticidal barriers, a controlled release of different insecticides or of insecticides in combination with synergists is desirable.

### DESCRIPTION / SUMMARY OF THE INVENTION

It is therefore the object of the invention to provide a method for production of a fibrous product where the release of a combination of a pyrethroid and PBOis controlled in a better way.

This purpose is achieved with a co-extruded monofilament accoording to claim 1 and a method according to claim 5. An example of fungal biopesticides for insect combat is described by Thomas and Read in Nature Reviews Microbiology, Vol. 5, May 2007, p.377. Though at present, especially fungal entomopathogens seem the most useful, an insect infecting virus, bacteria or protozoa may be applied, alternatively or in addition.

An extruder is configured to extrude a co-extruded thread, where the first part surrounds the second part.

By providing such a thread, the release of the pyrethroid in the first part and the PBO in the second part can be adjusted independently.

According to the invention, the first part has incorporated therein apyrethroid, with a first migration speed and a first insecticidal efficiency. The second parthas incorporated therein PBO, with a second migration speed. In order to achieve the optimal amount of released insecticide and synergist, the first and the second migration speed may be adjusted independently by migration inhibitors or migration promoters, because the migration inhibitors and promoters are present in independent parts of the thread, for example in independent filaments, without mutual interference.

A proper material for extrusion is polypropylene due to the low melting temperature which implies a low risk for evaporation or disintegration of the insecticides and synergists used in the molten polymer during extrusion. However, due to its low flammability and cotton-like feeling, polyester (Polyethylene Terephthalate, PET) is a preferred material for fabrics and nettings for which a thread according to the invention is used. However, the melting temperature of 250°C of polyester implies a risk for disintegration of the insecticide and synergist.

The PBO can be added to the molten polymer through a channel before the polymer transporting spindle, or if only a very short contact time is desired between the hot polymer and the pyrethroid/PBO, just upstream of the extrusion nozzle or even in the extrusion nozzle. It has been experimentally verified that a sufficient amount of PBO can be incorporated in polyester, especially, if the time for the exposure to that temperature is kept short.

How much this "sufficient amount" of PBO is, depends on the acceptable level of loss. In certain cases, a loss of 99% can be acceptable, if the 1% remaining PBO is still within the range of effective amounts to counteract insecticidal resistance for a long term. In other cases, a loss rate of less than 90% may be acceptable. It has been verified experimentally that for polyester, more than 50% of the PBO stays intact despite an extrusion temperature of more than 250°C.

In addition, the extruded polymer may be actively cooled at a short distance downstream of the extrusion nozzle, for example by a cold air jet.

Different combinations exist with the first yarn being a monofilament. An insecticidal monofilament made of polyethylene is known from the Olyset Net® mentioned in the introduction above. The second yarn could be a monofilament as well, for example a polyethylene monofilament with synergist. Alternatively, monofilament yarns may be combined with multifilament yarns. Not only may yarns be plied with different numbers of filaments, but also the materials may be different. For example, a stiff polyester yarn may be combined with a multifilament polyester yarn by plying techniques in order to achieve a combination of the advantages of each yarn.

The thread is not limited to two type of filaments but may also comprise further types of filaments.

In the case of a co-extruded monofilament, the ratio of the cross sectional area between the first and the second part may be adjusted to advantageously corresponding to the desired long term release rate.

As mentioned in the foregoing, co-extruding is used for providing a thread according to the invention. The thread according to the invention is a co-extruded monofilament with the first part and the second part in the monofilament. Different co-extrusion techniques may be applied, wherein the first part is a shell around the second part.

The first part and the second part may be made of the same polymer, or alternatively, contain different polymers.

In order to protect the insecticides in parts of the thread, these contain advantageously a UV protecting agent for protection of the insecticide from UV degradation.

Typical use of a thread according to the invention includes insecticidal barriers, for example mosquito nets, and woven or knitted fabrics or on-wovens of various kinds. Another application is for Dumuria fabrics or nettings, especially texturised woven fabrics. Commercially, these are available under the trademark PermaNet® Dumuria.

Other uses include a fencing, for example as disclosed in International patent application WO03/003827 by Bauer and Skovmand, application as a protective cover, for example as disclosed in International patent application WO03/090532 by Vestergaard Frandsen, or application as an air cleaning net, for example as disclosed in International patent application WO06/024304 by Vestergaard Frandsen.

In addition to the pyrethroid and PBO incorporated into the material, the material may have incorporated therein or impregnated on the surface thereof other relevant components, for example conductivity-enhancing agents to prevent static electricity, flame retardants, anti-soiling agents, antifouling agents, further biocides, pigments and dyestuffs.

The pyrethroid in connection with the invention is , preferably deltamethrin or permethrin, but other pyrethroids may apply as well, as disclosed as a list in WO 01/37662.

For migration of PBO and pyrethroid , it is important to take into account the migration speed of the PBO and pyrethroid in the matrix . For example, this may be regulated by a proper choice of selectively working migration promoters and migration inhibitors.

### SHORT DESCRIPTION OF THE DRAWINGS

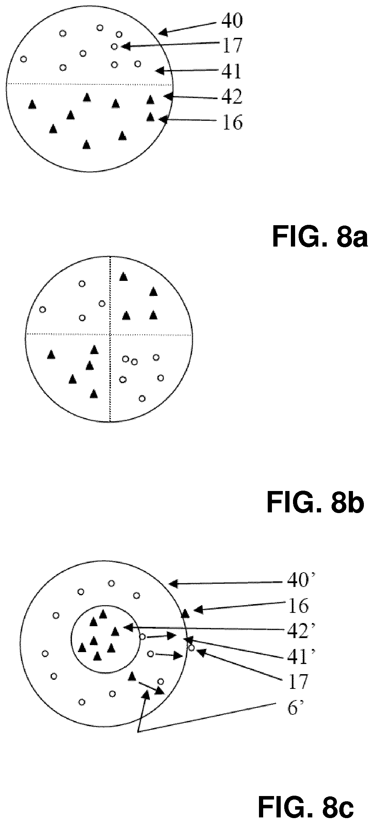

The invention will be explained in more detail with reference to the drawing, wherein only FIG. 8c illustrates the invention.
FIG. 1 is an illustration of a thread with two different monofilament yarns;
FIG. 2 illustrates the first yarn with migrating insecticide
FIG. 3 is an illustration of a thread with one monofilament yarn and one multifilament yarn;
FIG. 4 is an illustration of a thread being a multifilament yarn;
FIG. 5 is an illustration of a thread with three different types of filaments,
FIG. 6 is an illustration of a thread with different types of yarns and an insecticidal coating,
FIG. 7 illustratates co-extrusion of a thread,
FIG. 8 illustrates various types of co-extruded threads.

### DETAILED DESCRIPTION / PREFERRED EMBODIMENT

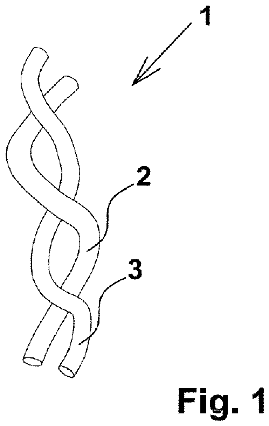

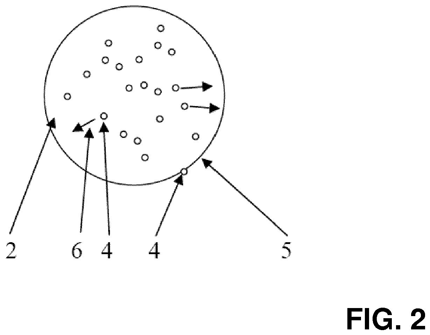

In FIG. 1, a thread 1 is illustrated. The thread contains a first monofilament 2 and a second filament 3 together forming the thread. As illustrated in FIG. 2, the first thread 2 comprises an insecticide 4, an insect sterilising agent, and/or an entomopathogen, and/or synergist that is migratably incorporated in the thread 2. The insecticide 4 migrates from the interior of the thread 2 to the surface 5 of the thread, which is illustrated by arrow 6. Once being located on the surface of the thread, the insecticide 4 may be taken up by an insect. The second thread 3 may comprise a second insecticide, insect sterilising agent, entomopathogen, or synergist.

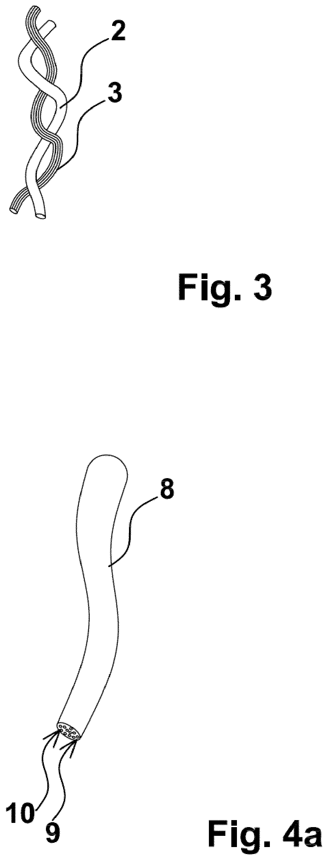

FIG. 3 illustrates where the first yarn 7 is a multifilament yarn combined with a second yarn 3, which is a monofilament.

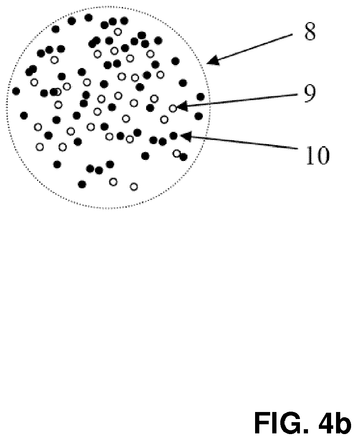

FIG. 4a and in enlarged form in FIG. 4b illustrates a thread which is a single multifilament yarn 8 with a large number of a first type of filaments 9 containing an insecticide and a large number of second type of filaments 10 containing a synergist.

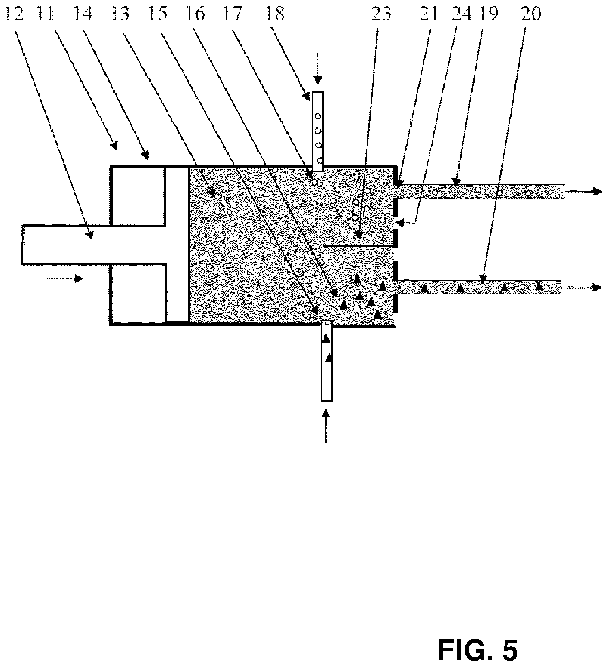

Such multi-filaments can be produced by extrusion as illustrated in FIG. 5. In an extruder 11, a piston 12 pushes molten polymer 13 from inside a housing 14 and through openings 24. From one supply tube 18, insecticide 17 is supplied into the molten polymer 13 and from a second supply tube 15, synergist 16 is supplied into the molten polymer. Due to the different location of the insecticide and the synergist, the extruded polymer in the lower flow 20 contains synergist and the extruded polymer in the upper flow 19 contains insecticide. A number of opening 24 may be provided in order to produce multi-filaments with a high number of filaments at the same time. A partition wall 23 may prevent mixing of the insecticide 17 and the synergist 16.

Alternatively, not illustrated however, there may be provided a first molten polymer with insecticide to the nozzle from a first extruder cavity and a second molten polymer with synergist from a second extruder cavity. The two polymers may be added to different part of the nozzle in order to provide multifilaments of two types from the same nozzle. As an alternative to the synergist or in addition, an insect sterilising agent or an entomopathogen may be included

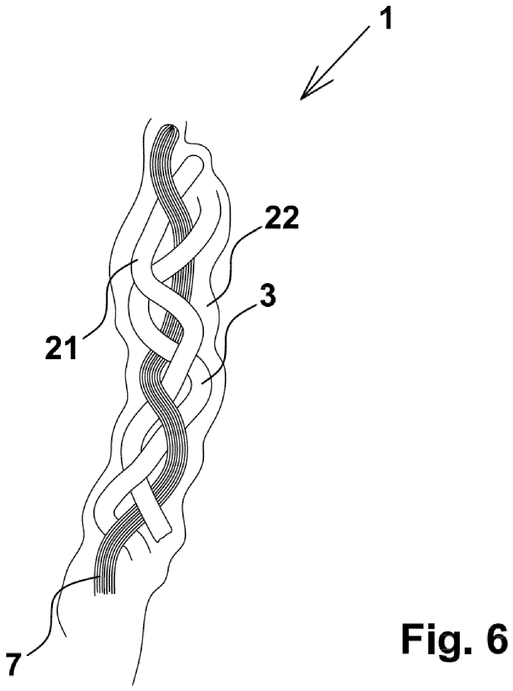

FIG. 6 illustrates a thread 1 with a number of yarns, a first yarn 7, which is a multifilament yarn comprising a first insecticide, a second yarn 3 comprising a synergist, and a third yarn 21 without insecticide or synergist but adding special physical properties to the yarn, for example increased strength. The thread 1 is coated with a wash protecting film 22 containing a further insecticide and allowing the synergist and the first insecticide to migrate through the film 22.

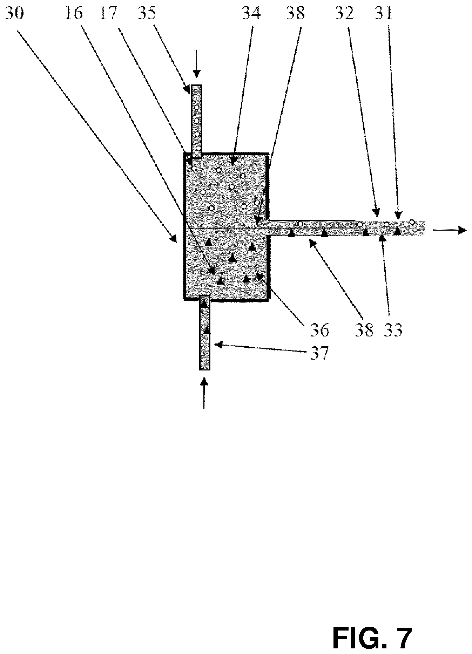

FIG7. illustrates an co-extruder 30 for a monofilament 31 with one part 32 containing polymer 17 and a second part 33 with synergist 16. Molten polymer 34 containing insecticide 17 is supplied under pressure via a first tube 35, and molten polymer 36 containing synergist 16 is supplied via a second tube 37. a partition wall 38 extending into the nozzle 39 prevents the two different molten polymers 32 33 to be mixed before extrusion.

The co-extrusion method may be used to provide a monofilament 40, as illustrated in FIG. 8a, with two cross-sectional halves, where the first half 41 comprises insecticide 17 and the second half 42 comprises synergist 16. The monofilament may contain more than two cross sectional parts, for example four, as illustrated in FIG. 8b, or more.

As illustrated in FIG. 8c, the monofilament 40' may comprise a first part 41' surrounding a second part 42', which constitutes a central core for the filament 40', for example with special mechanical properties. The core 42' contains synergist 16, which is migrating 6' through the first part 41' to the surface of the filament. Likewise, the insecticide 17 is migrating to the surface of the monofilament 40'.

## Claims

1. A co-extruded monofilament (40') having a first (41') and a second (42') cross sectional part, wherein the first part (40') is a shell around the second part (41'), wherein the first part (41') has a pyrethroid incorporated but no PBO incorporated in a polymeric material of the first part (41'), the second part having PBO incorporated in a polymeric material of the second part (42').

2. A co-extruded monofilament according to claim 1, wherein the second part (42') does not contain an insecticide.

3. Use of a co-extruded monofilament according to according to claim 1 or 2 for an insecticidal barrier.

4. Use according to claim 3, wherein the insecticidal barrier is a mosquito net or a fencing.

5. A method for production of a monofilament (40') according to claim 1 or 2, wherein the method comprises co-extruding the monofilament (40') with a first part (41') surrounding a second part (42'), which constitutes a central core for the filament (40'), the core (42') containing PBO (16) for migrating (6') through the first part (41') to the surface of the filament, and wherein a pyrethroid (17) but no PBO is provided in the first part for migrating to the surface of the monofilament (40').

## Patentansprüche

1. Ein co-extrudiertes Monofilament (40') mit einem ersten (41') und einem zweiten (42') Querschnittsteil, wobei der erste Teil (40') eine Hülle um den zweiten Teil (41') bildet, wobei der erste Teil (41') ein Pyrethroid aber kein PBO in einem Polymermaterial des ersten Teils (41') inkorporiert hat, und wobei der zweite Teil PBO in einem Polymermaterial des zweiten Teils (42') inkorporiert hat.

2. Ein co-extrudiertes Monofilament nach Anspruch 1, wobei der zweite Teil (42 ") kein Insektizid enthält.

3. Verwendung eines co-extrudierten Monofilaments nach Anspruch 1 oder 2 für eine insektizide Barriere.

4. Verwendung nach Anspruch 3, wobei die insektizide Barriere ein Moskitonetz oder ein Zaun ist.

5. Ein Verfahren zur Herstellung eines Monofilaments (40') nach Anspruch 1 oder 2, wobei das Verfahren das Co-extrudieren des Monofilaments (40') umfasst mit einem ersten Teil (41'), der einen zweiten Teil (42') umgibt, wobei der zweite Teil einen zentralen Kern für das Filament (40') bildet, wobei der Kern (42') PBO (16) enthält zur Diffusion (6') durch den ersten Teil (41') zur Oberfläche des Filaments, und wobei im ersten Teil zur Diffusion an die Oberfläche des Monofilaments (40') ein Pyrethroid (17) aber kein PBO vorgesehen ist.

## Revendications

1. Monofilament co-extrudé (40') ayant une première partie (41') et une deuxième partie (42') à section transversale, la première partie (40') étant une coque autour de la deuxième partie (41'), la première partie (41') ayant un pyréthroïde incorporé mais pas de PBO incorporé dans un matériau polymère de la première partie (41'), la seconde partie ayant du PBO incorporé dans un matériau polymère de la deuxième partie (42').

2. Monofilament co-extrudé selon la revendication 1, dans lequel la deuxième partie (42') ne contient pas d'insecticide.

3. Utilisation d'un mono filament co-extrudé selon la revendication 1 ou 2 pour une barrière insecticide.

4. Utilisation selon la revendication 3, dans laquelle la barrière insecticide est un moustiquaire ou une clôture.

5. Procédé de fabrication d'un monofilament (40') selon la revendication 1 ou 2, le procédé comprenant la coextrusion du monofilament (40') avec une première partie (41') entourant une deuxième partie (42'), qui constitue un noyau central pour le filament (40'), le noyau (42') contenant du PBO (16) pour migrer (6') à travers la première partie (41') vers la surface du filament, et dans lequel un pyréthroïde (17) mais pas de PBO est présent dans la première partie pour migrer vers la surface du mono filament (40').
